# FASCICULE DE BREVET EUROPEEN

(11) **EP 3 676 062 B1**
(45) Date de publication et mention de la délivrance du brevet: **21.12.2022**
(21) Numéro de dépôt: 18766150.9
(22) Date de dépôt: 29.08.2018
(51) Int. Cl.: B25J 17/02, B25J 19/06, F16D 3/50, F16D 3/62

(54) **DISPOSITIF MÉCANIQUE À COMPLIANCE PASSIVE POUR LA TRANSMISSION DE MOUVEMENT ROTATIF**
MECHANISCHE VORRICHTUNG MIT PASSIVER NACHGIEBIGKEIT ZUR ÜBERTRAGUNG EINER DREHBEWEGUNG
MECHANICAL DEVICE WITH PASSIVE COMPLIANCE FOR TRANSMITTING ROTATIONAL MOVEMENT

(30) Priorité: 01.09.2017 FR 1758116
(43) Date de publication de la demande: 08.07.2020
(73) Titulaire: Centre National de la Recherche Scientifique, 75794 Paris Cedex 16 (FR); Université De Poitiers, 86034 Poitiers Cedex (FR); Université De Limoges, 87069 Limoges Cedex (FR)
(72) Inventeur: ARSICAULT, Marc, 86160 Saint-Maurice-la-Clouère (FR); AYOUBI, Younsse, 86360 Chasseneuil Du Poitou (FR); LARIBI, Med Amine, 86340 Nouaillé-Maupertuis (FR); ZEGHLOUL, Saïd, 86800 Terce (FR); COURREGES, Fabien, 19100 Brive La Gaillarde (FR)
(74) Mandataire: Osha Liang
(86) Numéro de dépôt international: PCT/EP2018/073257
(87) Numéro de publication internationale: WO 2019/043068

(56) Documents cités:
- WO-A1-2012/038931
- KR-A- 20110 111 580
- US-A1- 2012 266 711
- US-A1- 2015 330 458

## Description

L'invention concerne un dispositif mécanique de transmission de mouvement entre deux segments d'un robot.

Le domaine de l'invention est le domaine des dispositifs mécaniques de transmission de mouvement, et plus particulièrement le domaine des dispositifs compliants de transmission de mouvement.

### ETAT DE LA TECHNIQUE

Les systèmes mécatroniques, en particulier les robots, sont manipulés par des opérateurs humains et dans un environnement souvent encombré. Ces systèmes sont donc soumis à des efforts externes ou des chocs. Ils doivent être compliants pour garantir la sécurité des opérateurs les manipulant et/ou pour éviter la détérioration de ces systèmes.

On connait les solutions de compliance active comprenant des capteurs d'efforts et des moyens de commande pour adapter la réponse de ces systèmes lorsqu'ils sont soumis à des efforts supérieurs à un seuil de sécurité, qui peut être ajusté par les moyens de commande. Cependant, ces systèmes ont un temps de réponse lent dû à la latence des capteurs et des moyens de commande. De plus, ils doivent être alimentés en continu pour fonctionner. Ces systèmes présentent une consommation énergétique importante. Ces systèmes manquent aussi de sécurité et de fiabilité en cas de coupure d'énergie ou de défaillance des capteurs utilisés.

On connait aussi les solutions de compliance passive comprenant des dispositifs de transmission de mouvement prévus pour se déformer pour des efforts importants. Certains de ces dispositifs présentent une rigidité croissante pour des efforts extérieurs croissants. Ces dispositifs manquent de sécurité car ils deviennent rapidement rigides pour des efforts importants. D'autres dispositifs deviennent compliants lorsque les efforts extérieurs dépassent le seuil de sécurité intrinsèque à l'architecture du dispositif. Ces dispositifs ne permettent pas le réglage du seuil de sécurité et restent coûteux car ils doivent être redimensionnés pour chaque seuil de sécurité désiré.

Des exemples de solutions de compliance passive sont décrits dans les documents de brevet WO 2012/038931 A1 et US 2015/330458 A1.

Un but de la présente invention est de remédier à ces inconvénients.

Un autre but de la présente invention est de proposer un dispositif de transmission de mouvement avec un comportement compliant moins coûteux et moins encombrant.

Un autre but de la présente invention est de proposer un dispositif de transmission de mouvement avec un comportement compliant plus sécurisé et plus fiable.

Un autre but de la présente invention est de proposer un dispositif de transmission de mouvement avec un comportement compliant facilement personnalisable.

### EXPOSE DE L'INVENTION

Au moins un des objectifs précités est atteint par un dispositif mécanique selon la revendication 1 annexée permettant la transmission d'un mouvement de rotation autour d'un axe de rotation, dit principal, d'un premier segment à un deuxième segment d'un robot. Un tel dispositif comprend :
- un premier ensemble prévu pour être fixé audit premier segment,
- un deuxième ensemble prévu pour être fixé audit deuxième segment, et
- un moyen d'entrainement entre lesdits ensembles ;
Du côté d'un desdits ensemble, ledit moyen d'entrainement est relié audit ensemble par une interface de liaison, élastiquement rotative autour d'un axe de rotation, dit secondaire, fixe par rapport audit ensemble, autorisant une rotation dudit moyen d'entrainement par rapport audit ensemble.

Avec le dispositif selon l'invention, le moyen d'entrainement étant agencé entre lesdits ensemble et relié à l'un des ensembles, le mouvement est transmis d'un segment vers un autre par le moyen d'entrainement. De plus, ladite interface de liaison étant rotative par rapport auxdits ensembles, elle permet la rotation desdits ensembles entre eux. Ainsi, en cas de choc ou d'effort important, lesdits ensembles sont entrainés en rotation l'un par rapport à l'autre. En outre, l'interface de liaison, étant élastiquement rotative, permet le retour du dispositif selon l'invention à son état initial avant un choc par exemple.

Le dispositif selon l'invention présente donc un comportement compliant plus fiable, et plus sécurisé car il ne s'abime pas lors de choc ou d'efforts importants. De plus, le dispositif comprend un nombre réduit de composants, il est donc moins encombrant et moins coûteux.

En outre, en ajustant l'élasticité de l'interface de liaison, il est possible de personnaliser facilement le dispositif selon l'invention.

Le dispositif selon l'invention peut comprendre au moins une interface de liaison élastiquement rotative du côté d'un seul ensemble.

Avantageusement, le moyen d'entrainement peut être agencé à une distance non nulle de l'axe secondaire de sorte que l'interface de liaison entraine la rotation dudit moyen d'entrainement lorsque ledit dispositif est soumis à un couple supérieur à un seuil, dit de sécurité.

Le seuil de sécurité dépend de la distance entre l'axe secondaire et le moyen d'entrainement.

Le dispositif selon l'invention est donc plus facilement personnalisable.

En particulier, l'axe secondaire peut être agencé en périphérie dudit ensemble comprenant l'interface de liaison.

Dans une version de réalisation préférée, le dispositif selon l'invention peut comprendre au moins un moyen d'ajustement de la position du moyen d'entrainement par rapport à l'axe secondaire de sorte à modifier le seuil de sécurité.

Le moyen d'ajustement permet donc de régler le seuil de sécurité au-delà duquel les ensembles sont entrainés en rotation l'un par rapport à l'autre. Le dispositif selon l'invention est plus facilement personnalisable. De plus, le moyen d'ajustement permet de régler le niveau de sécurité du dispositif selon l'invention, par exemple en fonction de l'environnement ou de l'utilisation du robot. Le dispositif selon l'invention est donc plus sécurisé et plus efficace.

Le moyen d'ajustement peut être agencé dans le premier ensemble et/ou dans le deuxième ensemble.

Pour au moins une interface de liaison, le moyen d'ajustement peut comprendre du côté de ladite interface de liaison une ouverture oblongue dans laquelle le moyen d'entrainement est agencé.

Ladite ouverture peut être agencée dans la direction reliant l'axe secondaire à l'axe principal.

L'ouverture oblongue peut avoir une largeur égale à l'épaisseur du moyen d'entrainement. La longueur de ladite ouverture peut être comprise entre 10 mm et 50 mm.

En particulier, lorsque le moyen d'entrainement est dans une position, dite d'arrêt, en butée dans l'ouverture oblongue du côté de l'axe principal, les ensembles peuvent être solidaires.

En effet, lorsque le moyen d'entrainement est dans sa position d'arrêt, la rotation dudit moyen d'entrainement par l'interface de liaison n'est pas assurée. En conséquence, la rotation des ensembles entre eux n'est pas possible et le dispositif selon l'invention devient rigide.

Préférentiellement, le moyen d'ajustement peut comprendre un moyen de déplacement dudit moyen d'entrainement par rapport à l'axe secondaire. Un tel moyen peut être un vérin, un moteur électrique, etc.

Le moyen d'ajustement peut comprendre un rail coulissant relié audit moyen de déplacement. Le moyen d'entrainement peut être agencé sur ledit rail coulissant.

Le dispositif selon l'invention peut comprendre un moyen de maintien dudit rail coulissant. Ledit moyen de maintien peut être une pièce comprenant une ouverture oblongue dans laquelle le moyen d'entrainement est agencé, ou un support de guidage dudit rail coulissant, etc.

Dans une version privilégiée du dispositif selon l'invention, le moyen d'entrainement peut comprendre deux doigts, agencés symétriques par rapport à l'axe de rotation principal, ledit dispositif comprenant pour au moins un ensemble deux interfaces de liaison élastiquement rotatives autour de deux axes secondaires symétriques par rapport à l'axe de rotation principal, associées chacune à un desdits doigts.

L'utilisation de deux doigts permet une répartition des efforts sur les deux interfaces de liaison. Le dispositif selon l'invention est ainsi plus fiable.

En particulier, le dispositif selon l'invention peut comprendre, pour chaque doigt, un moyen d'ajustement de la position dudit doigt.

Chaque moyen d'ajustement peut comprendre du côté d'au moins une, en particulier chaque, interface de liaison une ouverture oblongue dans laquelle un doigt est agencé.

De plus, chaque moyen d'ajustement peut comprendre un rail coulissant solidaire avec un doigt.

Le dispositif selon l'invention comprend, pour au moins une interface de liaison, un mécanisme de rappel élastique, associée à ladite interface de liaison, s'opposant élastiquement à la rotation de ladite interface de liaison.

Le dispositif selon l'invention comprend, du côté d'un même ensemble, deux interfaces de liaison, coopérant avec un même mécanisme de rappel.

Cet agencement permet une meilleure répartition des efforts. Le dispositif selon l'invention est plus robuste mécaniquement. Il est ainsi plus fiable et plus sécurisé.

Dans un mode de réalisation avantageux du dispositif selon l'invention, un mécanisme de rappel peut comprendre :
- une came rotative, en particulier autour de l'axe de rotation principal ;
- au moins un galet suiveur en contact avec ladite came maintenu par au moins un ressort de rappel ;
de sorte que ladite came peut déplacer ledit galet suiveur dans sa rotation.

Lorsque les ensembles sont entrainés en rotation l'un par rapport à l'autre, l'angle, dit de déflexion, entre les ensembles est, d'une part, déterminé par la distance entre le moyen d'entrainement. D'autre part, l'angle de déflexion varie en fonction du contact du galet suiveur et de la came et donc du profil de la came.

Lorsque le dispositif selon l'invention est soumis à un couple, l'angle de déflexion augmente avec le couple jusqu'à la valeur du seuil de sécurité. Pour un couple supérieur au seuil de sécurité, l'angle de déflexion continue d'augmenter mais le couple est limité au seuil de sécurité.

La came peut être agencée dans le premier ensemble ou le deuxième ensemble.

Au moins un, en particulier chaque, galet suiveur peut être agencé dans le premier ensemble ou le deuxième ensemble. Au moins un, en particulier chaque, galet suiveur peut être agencé libre en translation par rapport audit ensemble.

Au moins un, en particulier chaque, galet suiveur peut avoir une forme cylindrique ou sphérique.

Dans une version de réalisation particulière du dispositif selon l'invention, la came peut se présenter sous la forme de « 8 », son axe de rotation passant par le centre de gravité de ladite came et suivant l'épaisseur de ladite came.

La came avec un profil en « 8 » permet une faible variation de l'angle de déflexion, comprise entre 0° et 2.5°, lorsque le couple augmente, mais au-delà du seuil de sécurité, la variation de l'angle de déflexion est plus importante et peut être comprise entre 2.5° et 25°.

La came peut avoir une longueur comprise entre 30 mm et 90 mm, une largeur comprise entre 10 mm et 40 mm et une épaisseur comprise entre 2 mm et 15 mm.

En particulier, le profil de la came peut être symétrique par rapport à l'axe principal. Le comportement du dispositif selon l'invention est ainsi plus uniforme quel que soit son sens de rotation.

Dans une version préférée de réalisation du dispositif selon l'invention, le mécanisme de rappel peut comprendre deux galets suiveurs agencés symétriques par rapport à l'axe de rotation principal.

Les deux galets suiveurs permettent une meilleure répartition des efforts sur la came. Le dispositif selon l'invention est ainsi plus fiable et plus sécurisé.

Particulièrement, la came peut être reliée à l'interface de liaison au travers d'un pignon solidaire de ladite came, et en prise avec une denture prévue sur ladite interface de liaison.

L'utilisation d'un pignon et d'une interface de liaison à denture permet une réduction en couple. En particulier le rapport de réduction en vitesse du pignon et de l'interface de liaison dépend de leurs dentures et peut être compris entre 5 et 9.

Le pignon peut être agencé dans le premier ensemble ou le deuxième ensemble.

Au moins une interface de liaison peut comprendre une denture interne ou externe.

En particulier, le pignon peut être agencé rotatif autour de l'axe principal.

Avantageusement, au moins une interface de liaison peut se présenter sous la forme d'une demi-couronne à denture interne.

Dans un mode de réalisation préféré du dispositif selon l'invention, le premier ensemble peut être un boitier cylindrique, dit premier boitier, rotatif autour de l'axe principal, ledit premier boitier comprenant deux moyens d'entrainement symétriques se présentant sous la forme de deux doigts, chaque doigt étant agencé sur un rail coulissant relié à un vérin prévu pour déplacer ledit doigt dans le plan perpendiculaire audit axe principal.

Le premier boitier peut comprendre un rail fixe sur lequel sont agencés les rails coulissants.

Le premier boitier peut avoir un diamètre compris entre 50 mm et 150 mm et une hauteur comprise entre 15 mm et 50 mm.

Le premier boitier peut être fabriqué en tout alliage métallique, par exemple en acier, ou en aluminium, ou en plastique.

Dans un mode préféré de réalisation du dispositif selon l'invention, le deuxième ensemble peut être un boitier cylindrique, dit deuxième boitier, rotatif autour de l'axe principal, ledit deuxième boitier comprenant :
- deux interfaces de liaison, chaque interface de liaison se présentant sous la forme d'une demi-couronne à denture interne et comprenant une ouverture oblongue prévue pour recevoir un moyen d'entrainement,
- un pignon, rotatif autour de l'axe principal, en prise avec les dentures des demi-couronnes,
- une came se présentant sous la forme de « 8 » reliée par un arbre audit pignon, et
- deux galets suiveurs agencés symétriques et libres en translation dans ledit deuxième boitier et maintenus en contact avec la came par huit ressorts.

Chaque galet peut être relié à deux pièces coulissantes. Lesdites pièces coulissantes peuvent être agencées en dessous et au-dessus de chaque galet.

Le deuxième boitier peut comprendre, pour chaque pièce coulissante, une tige de guidage agencée fixe dans ledit deuxième boitier. Chaque pièce coulissante peut être reliée au deuxième boitier par deux ressorts.

Le deuxième boitier peut avoir un diamètre compris entre 50 mm et 150 mm et une hauteur comprise entre 30 mm et 80 mm.

Le premier et le deuxième boitier peuvent avoir le même diamètre.

Préférentiellement, le premier ensemble peut comprendre au moins un roulement agencé en contact avec le deuxième ensemble et prévu pour permettre la rotation entre le premier ensemble et le deuxième ensemble.

En particulier, le premier boitier peut comprendre au moins un roulement agencé en contact avec le deuxième boitier et prévu pour permettre la rotation entre le premier boitier et le deuxième boitier.

Avantageusement, le premier boitier peut comprendre deux roulements, chaque roulement s'étendant sur une partie dudit premier boitier et en contact avec le deuxième boitier.

Le dispositif selon l'invention peut transmettre un mouvement depuis le deuxième segment vers le premier segment.

Alternativement, le dispositif selon l'invention peut transmettre un mouvement depuis le premier segment vers le deuxième segment.

Le premier ensemble, respectivement le deuxième ensemble, peut être relié audit premier segment, respectivement le deuxième segment, par tout moyen de fixation, amovible ou non, tel que par vissage, collage, serrage, etc.

Le premier segment et/ou le deuxième segment peuvent être motorisés.

En particulier, le premier et/ou le deuxième segment peut comprendre un motoréducteur. Le premier et/ou le deuxième ensemble peut être relié audit motoréducteur.

Dans une version particulière de réalisation, le dispositif selon l'invention peut comprendre :
- au moins un capteur de position prévu pour mesurer une rotation du premier ensemble par rapport au deuxième ensemble, et/ou
- au moins un capteur de déformation prévu pour mesurer un effort au niveau du premier ensemble et/ou du deuxième ensemble.

En particulier, au moins un capteur de position et/ou au moins un capteur de déformation peuvent être prévus pour mesurer l'angle de déflexion et/ou un couple transmis d'un ensemble vers un autre ensemble.

Selon un autre aspect de l'invention, il est proposé un robot comprenant au moins un dispositif selon l'invention entre deux segments dudit robot.

Le robot selon l'invention peut être toute machine mécatronique comprenant au moins deux segments, l'un desdits segment entrainant la rotation de l'autre segment.

Avantageusement, le robot selon l'invention peut se présenter sous la forme d'un bras manipulateur équipé ou non ou d'un outil ou d'une tête fonctionnelle ou d'un porte outil.

### DESCRIPTION DES FIGURES ET MODES DE REALISATION

D'autres avantages et caractéristiques apparaîtront à l'examen de la description détaillée d'exemples de réalisation nullement limitatifs, et des dessins annexés sur lesquels :
- les FIGURES 1a et 1b sont des représentations schématiques du principe de fonctionnement d'un exemple non limitatif du dispositif selon l'invention,
- les FIGURES 2a et 2b sont des représentations schématiques d'un exemple non limitatif d'un mécanisme de rappel mis en œuvre du dispositif selon l'invention,
- la FIGURE 3 est une représentation schématique d'un exemple non limitatif de comportement du mécanisme de rappel des FIGURES 2a et 2b,
- les FIGURES 4a et 4b sont des représentations schématiques d'un exemple non limitatif d'un ensemble du dispositif selon l'invention,
- les FIGURES 5a, 5b et 5c sont des représentations schématiques d'un exemple non limitatif d'un ensemble du dispositif selon l'invention ; et
- la FIGURE 6 est une représentation schématique d'exemples de comportement d'un dispositif selon l'invention comprenant les ensembles des FIGURES 4 et 5.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détail structurel, ou avec seulement une partie des détails structurels si cette partie uniquement est suffisante pour conférer un avantage technique ou pour différencier l'invention par rapport à l'état de la technique antérieure.

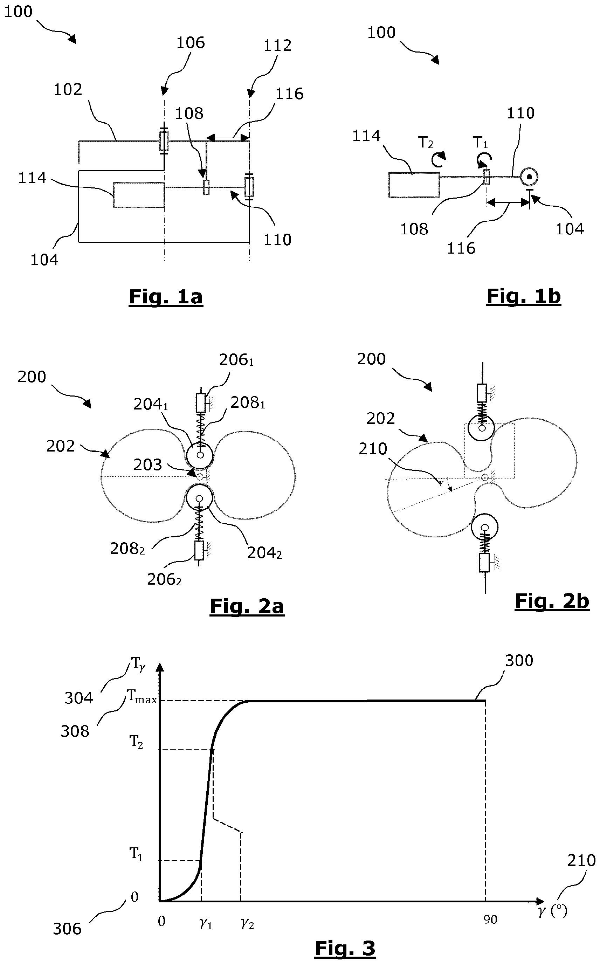

Les FIGURES 1a et 1b sont des représentations schématiques du principe de fonctionnement d'un exemple non limitatif du dispositif selon l'invention.

La FIGURE la est une vue de face d'une représentation schématique d'un exemple du dispositif selon l'invention, tandis que la FIGURE 1b est une vue de dessus d'une représentation schématique de l'exemple de la FIGURE 1a.

Le dispositif 100 comprend un premier ensemble 102 qui peut être relié à un premier segment d'un robot non représenté sur la FIGURE 1. Le dispositif 100 comprend aussi un deuxième ensemble 104 qui peut être relié à un deuxième segment d'un robot non représenté sur la FIGURE 1. En particulier, le deuxième ensemble 104 peut être relié à un motoréducteur équipant ledit deuxième segment.

Les premier ensemble 102 et deuxième ensemble 104 sont prévus rotatifs autour d'un axe de rotation 106, dit principal. Le premier ensemble 102 est aussi prévu rotatif par rapport au deuxième ensemble 104.

Le premier ensemble 102 comprend un doigt 108, dit d'entrainement, relié au premier ensemble 102 et agencé entre le premier ensemble 102 et le deuxième ensemble 104.

Le deuxième ensemble 104 comprend en outre une interface de liaison 110 élastiquement rotative par rapport au deuxième ensemble 104 autour d'un axe de rotation 112, dit secondaire, fixe par rapport au deuxième ensemble 104. L'axe secondaire 112 est agencé en périphérie dudit deuxième ensemble 104.

L'interface de liaison 110 est associée à un mécanisme de rappel 114, prévu pour s'opposer, de façon élastique, à la rotation de l'interface de liaison 110.

Le doigt d'entrainement 108 est agencé à une distance 116 non nulle de l'axe secondaire 112.

Lorsque le deuxième ensemble 104 est entrainé en rotation par un couple, dit d'entrée, le premier ensemble 102 est entrainé en rotation par le doigt d'entrainement 108 par un couple T₁ dépendant du couple en entrée et de la distance 116. Si le couple T₁ est supérieur au couple de résistance T₂ du mécanisme de rappel 114, l'interface de liaison 110 entraine la rotation du doigt d'entrainement 108 et donc du premier ensemble 102 par rapport au deuxième ensemble 104 dans un sens contraire à la rotation dudit deuxième ensemble 104.

La variation de la distance 116 permet de varier le couple T₁ et donc de varier la valeur du couple d'entrée, dite seuil de sécurité, à partir de laquelle le doigt d'entrainement 108 est entrainé en rotation.

Les FIGURES 2a et 2b sont des représentations schématiques d'un exemple non limitatif d'un mécanisme de rappel mis en œuvre du dispositif selon l'invention.

La FIGURE 2a est une représentation schématique du mécanisme de rappel au repos, tandis que la FIGURE 2b est une représentation schématique du mécanisme de rappel de la FIGURE la en déformation.

Le mécanisme de rappel 200 des FIGURES 2a et 2b peut être le mécanisme de rappel 114 des FIGURES la et 1b.

Le mécanisme de rappel 200 comprend une came 202 rotative autour d'un axe de rotation 203. La came 202 présente un profil en « 8 » symétrique par rapport à son axe de rotation 203.

Le mécanisme de rappel 200 comprend en outre deux galets suiveurs 204₁ et 204₂ agencés libre en translation par respectivement les liaisons 206₁ et 206₂.

Chaque galet suiveur 204₁ et 204₂ est maintenu en contact avec la came 202 par un ressort de rappel 208₁, respectivement 208₂.

Lorsque la came 202 est entrainée en rotation par un couple extérieur selon un angle 210, dit de rappel, le galet suiveur 204₁, respectivement 204₂, s'oppose à la rotation de ladite came 200 en suivant le profil de la came 200. Le profil de variation de l'angle de rappel 210 dépend donc du profil de la came 202.

La FIGURE 3 est une représentation schématique d'un exemple non limitatif de comportement du mécanisme de rappel des FIGURES 2a et 2b.

La courbe 300 représente le comportement de la came 202 du mécanisme de rappel 200 des FIGURES 2a et 2b.

La courbe 300 représente la relation entre l'angle de rappel 210 de la came 202 en fonction d'un couple 304 auquel est soumis ledit mécanisme de rappel 200.

Lorsque le couple 304 augmente, l'angle de rappel 210 augmente avec une variation comprise entre 0° et 2.5°, jusqu'à une valeur maximale du couple 308.

Lorsque le couple 304 est supérieur à la valeur maximale 308, l'angle de rappel 302 continue d'augmenter mais le couple 304 est limité à une valeur maximale 308.

Le mécanisme de rappel 200 permet donc, d'une part, une faible variation de l'angle de rappel 210 lorsque le couple 304 augmente, et d'autre part, de limiter le couple 304 à une valeur maximale 308.

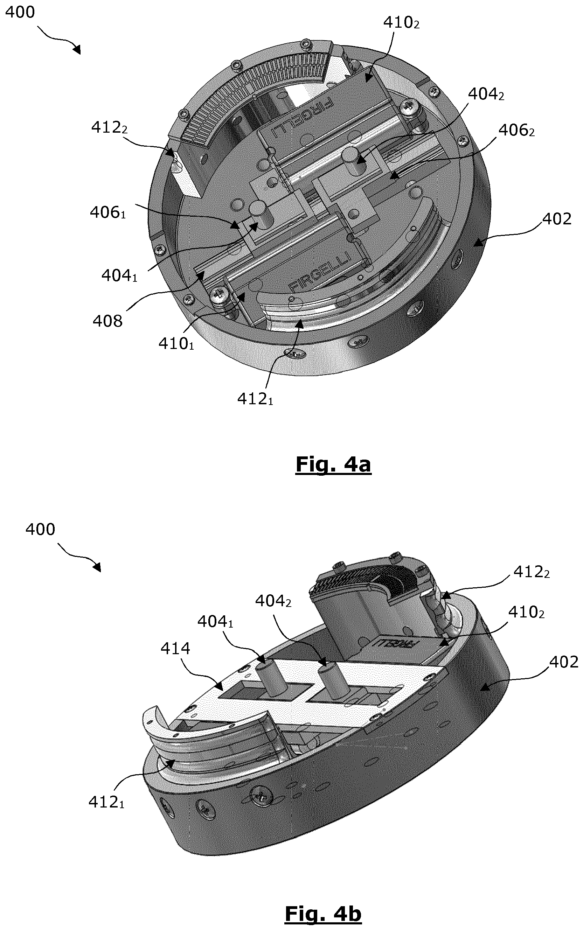

Les FIGURES 4a et 4b sont des représentations schématiques d'un exemple non limitatif d'un ensemble du dispositif selon l'invention.

Les FIGURES 4a et 4b sont deux vues différentes de l'ensemble 400 qui peut être un ensemble du dispositif 100 des FIGURES la et 1b.

L'ensemble 400 se présente sous la forme d'un boitier 402, dit premier boitier, ayant une section circulaire prévu rotatif autour d'un axe de rotation correspondant à l'axe de révolution dudit premier boitier 402. Le premier boitier 402 peut avoir un diamètre compris entre 50 mm et 150 mm, en particulier égal à 92 mm. Le premier boitier 402 peut avoir une hauteur comprise entre 15 mm et 50 mm, en particulier égale à 18 mm.

Le premier boitier 402 comprenant deux doigts 404₁ et 404₂ identiques et agencés symétriques par rapport à l'axe de rotation. Les doigts 404 ont une forme cylindrique, ayant une hauteur comprise entre 5 mm et 15 mm.

Le doigt 404₁, respectivement 404₂, est agencé sur un rail coulissant 406₁, respectivement 406₂. Les rails 406 sont symétriques et mobiles sur un rail fixe 408 par rapport au premier boitier 402.

Le rail coulissant 406₁, respectivement 406₂, est relié à un vérin 410₁, respectivement 410₂, prévu pour entrainer la translation dudit doigt 404₁, respectivement 4042.

Les vérins 410 sont agencés fixes dans le premier boitier 402 et peuvent être pilotés à distance de façon sans fil ou filaire. Les vérins 410 peuvent être reliés à un moyen de commande. Les vérins 410 peuvent déplacer les doigts 404 sur une distance comprise entre 10 mm et 50 mm.

Le premier boitier 402 comprend en outre deux cages 412₁ et 412₂, dites cages intérieures, de roulement. Chaque cage intérieure 412 s'étend sur une partie du périmètre dudit premier boitier 402. Chaque cage intérieure 412 peut s'étendre sur un quart du périmètre dudit premier boitier 402.

Le premier boitier 402 comprend en outre une pièce 414 prévue pour maintenir les doigts 404. La pièce 414 comprend deux ouvertures rectangulaires symétriques par rapport à l'axe de rotation. Ces ouvertures sont prévues pour le passage des doigts 404. La pièce 414 est fixée audit premier boitier 402 par vissage.

Le premier boitier 402 peut être relié à un segment d'un robot prévu pour recevoir un mouvement d'un autre segment du robot.

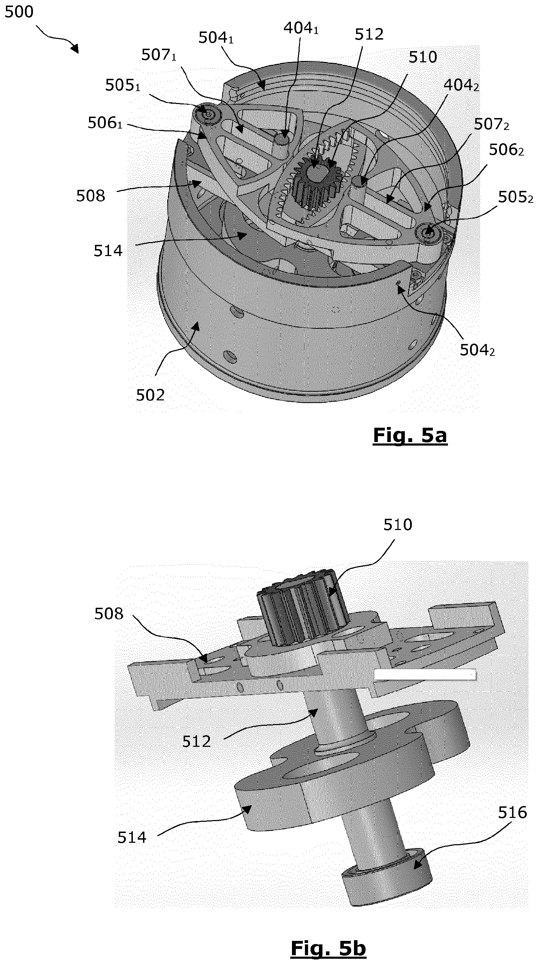

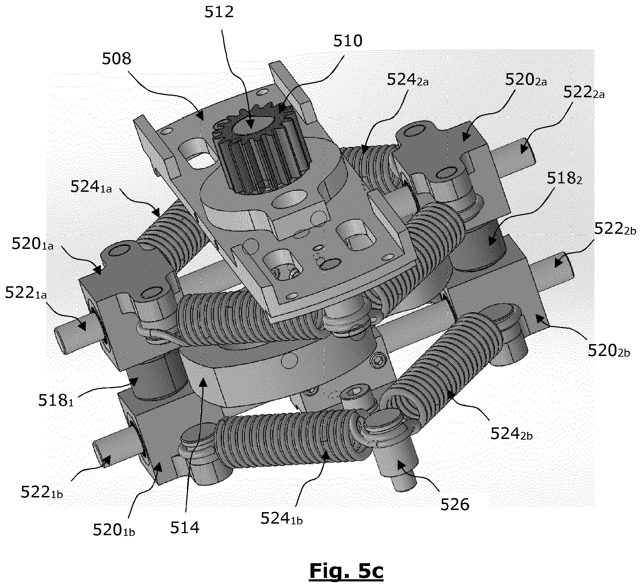

Les FIGURES 5a, 5b et 5c sont des représentations schématiques d'un exemple non limitatif d'un ensemble du dispositif selon l'invention.

La FIGURE 5a est une vue en perspective de l'ensemble 500 qui peut être un ensemble du dispositif 100 des FIGURES la et 1b.

L'ensemble 500 se présente sous la forme d'un boitier 502, dit deuxième boitier, ayant une section circulaire prévu rotatif autour d'un axe de rotation, dit principal, correspondant à l'axe de révolution dudit deuxième boitier 502. Le deuxième boitier 502 peut avoir un diamètre compris entre 50 mm et 150 mm, en particulier égal à 92 mm. Le deuxième boitier 502 peut avoir une hauteur comprise entre 30 mm et 80 mm, en particulier égale à 59 mm.

Le deuxième boitier 502 comprend deux cages 504₁ et 504₂, dites cages extérieures, de roulement. Chaque cage extérieure 504 s'étend sur une partie du périmètre dudit premier boitier 402. Chaque cage extérieure 504 peut s'étendre sur environ la moitié du périmètre dudit premier boitier 502. Les cages extérieures 504 sont prévues pour coopérer avec les cages intérieures 412 du premier boitier 402 des FIGURES 4a et 4b.

Le deuxième boitier 502 comprend deux interfaces de liaison 506₁ et 506₂ agencés symétriques par rapport à l'axe de rotation. L'interface de liaison 506₁, respectivement 506₂, est rotatif par rapport au deuxième boitier 502 autour d'un axe de rotation, dit secondaire, 505₁, respectivement 505₂. Les axes secondaires 505 sont agencés sur le périmètre du boitier 502 symétriques par rapport à l'axe de rotation principal.

L'interface de liaison 506₁, respectivement 506₂, comprend une ouverture oblongue 507₁, respectivement 507₂ longitudinale dans la direction passant par les axes secondaires 505 et l'axe principal. Les ouvertures 507 sont prévues pour recevoir les doigts 404 du premier boitier 402 des FIGURES 4a et 4b. Les doigts 404 peuvent être agencés à une distance non nulle, et variable, des axes secondaires 505. Chaque interface de liaison 506 comprend en outre une partie à denture.

Le deuxième boitier 502 comprend en outre une pièce 508 fixe par rapport audit deuxième boitier 502 prévue pour maintenir les interfaces de liaison 506. La pièce 508 comprend les axes de rotation 505.

Le deuxième boitier 502 comprend aussi un pignon 510 agencé rotatif autour de l'axe principal et en prise avec les dentures des interfaces de liaison 506. Le pignon 510 est relié, par serrage, à un arbre 512.

Le deuxième boitier 502 comprend en outre un mécanisme de rappel prévu pour s'opposer à la rotation des interfaces de liaison 506 et comprenant une came 514 agencée sur l'arbre 512.

La FIGURE 5b est une représentation de la came 514.

La came 514 peut être la came 202 de la FIGURE 2. La came 514 présente un profil sous la forme de « 8 » symétrique par rapport à l'axe de rotation principale. La came 514 est assemblée avec l'arbre 512 par serrage par exemple. L'arbre 512 est maintenu en rotation autour de l'axe principal, d'une part par un roulement agencé dans la pièce 508 et d'autre part par un roulement 516 agencé dans le deuxième boitier 502.

La FIGURE 5c est une représentation détaillée du mécanisme de rappel élastique.

Le mécanisme de rappel comprend en outre deux galets suiveurs 518₁ et 518₂ en contact avec la came 514. Les galets suiveurs 518 sont agencés symétrique par rapport à l'axe principal. Le galet suiveur 518₁, respectivement 5182, est maintenu par deux pièces coulissantes 520₁ₐ et 520_{1b}, respectivement 5202a et 5202b.

Les pièces coulissantes 520₁ₐ et 520₂ₐ sont agencés au-dessus des galets suiveurs 518 et agencées mobiles suivant les tiges 522₁ₐ et 522₂ₐ, respectivement. De plus, les pièces coulissantes 520₁ₐ et 520₂ₐ sont reliés au deuxième boitier 502 à travers la pièce 508, par deux ressorts 524₁ₐ symétriques par rapport à la tige 522₁ₐ, et deux ressorts 524₂ₐ symétriques par rapport à la tige 522₂ₐ.

Les pièces coulissantes 520_{1b} et 520_{2b} sont agencés au-dessous des galets suiveurs 518 et agencées mobiles suivant les tiges 522_{1b} et 522_{2b}, respectivement. De plus, les pièces coulissantes 520_{1b} et 520_{2b} sont reliés au deuxième boitier 502 par deux ressorts 524_{1b} et deux ressorts 524_{2b} reliés à une pièce de fixation 526 agencée fixe dans ledit deuxième boitier 502.

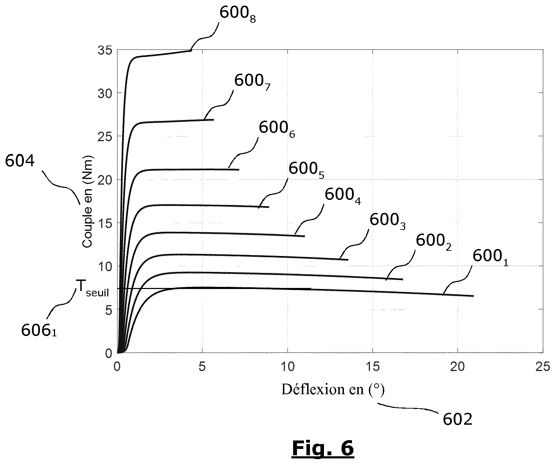

La FIGURE 6 est une représentation schématique d'exemples de comportement d'un dispositif selon l'invention comprenant les ensembles des FIGURES 4 et 5.

Les courbes 600₁-600₈ de la FIGURE 6 représentent des exemples comportement du dispositif comprenant les ensembles 400 et 500 des FIGURES 4 et 5.

Chaque courbe 600 représente un angle de déflexion 602 dudit dispositif en fonction d'un couple 604 appliqué audit dispositif. Chaque courbe 600 correspond à une distance entre les doigts 404 et l'axe de rotation secondaire 505, la courbe 600₁ correspondant à la plus grande distance et la courbe 600₈ correspondant à la plus petite distance.

Le profil de chaque courbe 600 suit le profil de la courbe de rotation de la came 514. La courbe de rotation de la came peut être la courbe 300 de la FIGURE 3.

La courbe 600₁ montre une faible variation de l'angle de déflexion 602 lorsque le couple 604 augmente. Cette variation est inférieure à 2°. Lorsque le couple 604 dépasse un seuil 606₁, dit de sécurité, la variation de l'angle de déflexion 602 est plus importante et le couple 606 est limité au seuil de sécurité 606₁.

Le seuil de sécurité 606 augmente lorsque la distance diminue entre les doigts 404 et l'axe de rotation 505.

Bien sûr, l'invention n'est pas limitée aux exemples qui viennent d'être décrits et de nombreux aménagements peuvent être apportés à ces exemples sans sortir du cadre de l'invention tel que défini par les revendications ci-jointes.

## Revendications

1. Dispositif (100) mécanique de transmission d'un mouvement de rotation autour d'un axe de rotation (106), dit principal, d'un premier segment à un deuxième segment d'un robot, ledit dispositif (100) comprenant :
- un premier ensemble (102;400) prévu pour être fixé audit premier segment,
- un deuxième ensemble (104;500) prévu pour être fixé audit deuxième segment,
- un moyen d'entrainement (108;404) entre lesdits ensembles (102;400,104;500) ;
dans lequel, du côté d'un desdits ensemble (104;500), ledit moyen d'entrainement (108;404) est relié audit ensemble (104;500) par une interface de liaison (110;506), élastiquement rotative autour d'un axe de rotation (112;505), dit secondaire, fixe par rapport audit ensemble (104;500), autorisant une rotation dudit moyen d'entrainement (108;404) par rapport audit ensemble (104;500), **caractérisé en ce que** le dispositif comprend, du côté d'un même ensemble (102;400,104;500), deux interfaces de liaison (110;506), coopérant avec un même mécanisme de rappel (114,200) s'opposant élastiquement à la rotation de chaque interface de liaison (110;506).

2. Dispositif (100) selon la revendication 1, dans lequel le moyen d'entrainement (108;404) est agencé à une distance (116) non nulle de l'axe secondaire (112;505) de sorte que l'interface de liaison (110;506) entraine la rotation dudit moyen d'entrainement (108;404) lorsque ledit dispositif (100) est soumis à un couple supérieur à un seuil, dit de sécurité.

3. Dispositif (100) selon la revendication 2, comprenant au moins un moyen d'ajustement de la position du moyen d'entrainement (108;404) par rapport à l'axe secondaire (112;505) de sorte à modifier le seuil de sécurité.

4. Dispositif (100) selon la revendication 3, dans lequel le moyen d'ajustement comprend du côté de l'interface de liaison (110;506) une ouverture oblongue (507) dans laquelle le moyen d'entrainement (108;404) est agencé.

5. Dispositif selon la revendication 4, dans laquelle, lorsque le moyen d'entraînement (108;404) est dans une position, dite d'arrêt, en butée dans l'ouverture oblongue (507) du côté de l'axe de rotation principal (106), la rotation des ensembles (102;400, 104;500) entre eux n'est pas possible.

6. Dispositif (100) selon l'une quelconque des revendications 1 à 5, dans lequel le moyen d'entrainement (108;404) comprend deux doigts, agencés symétriques par rapport à l'axe de rotation principal (106), et dans lequel les deux interfaces de liaison (110;506) sont élastiquement rotatives autour de deux axes secondaires (112;505) symétriques par rapport à l'axe de rotation principal (106), et associées chacune à un desdits doigts.

7. Dispositif (100) selon la revendication 6 comprenant, pour chaque doigt, un moyen d'ajustement de la position dudit doigt.

8. Dispositif (100) selon l'une quelconque des revendications 1 à 7, dans lequel le mécanisme de rappel (114,200) comprend :
- une came (202;514) rotative, en particulier autour de l'axe de rotation principal (106) ;
- au moins un galet suiveur (204,518) en contact avec ladite came (202;514) maintenu par au moins un ressort de rappel (524) ;
de sorte que ladite came (202;514) déplace ledit galet suiveur (204,518) dans sa rotation.

9. Dispositif (100) selon la revendication 8, dans lequel le profil de la came (202;514) est symétrique par rapport à l'axe de rotation principal (106).

10. Dispositif (100) selon la revendication 8 ou 9, dans lequel la came (202;514) se présente sous la forme de « 8 », son axe de rotation passant par le centre de gravité de ladite came (202;514) et suivant l'épaisseur de ladite came (202;514).

11. Dispositif (100) selon l'une quelconque des revendications 8 à 10, dans lequel le mécanisme de rappel (114,200) comprend deux galets suiveurs (204;518) agencés symétriques par rapport à l'axe de rotation de la came (202,514).

12. Dispositif (100) selon l'une quelconque des revendications 8 à 11, dans lequel la came (202,514) est reliée à l'interface de liaison (110;506) au travers d'un pignon (510) solidaire de ladite came (202,514), et en prise avec une denture (510) prévue sur ladite interface de liaison (110;506).

13. Dispositif (100) selon l'une quelconque des revendications 1 à 12, dans lequel l'interface de liaison (110;506) se présente sous la forme d'une demi-couronne à denture interne.

14. Dispositif selon l'une quelconque des revendications 1 à 13, dans lequel le premier ensemble (400) est un boitier cylindrique, dit premier boitier, rotatif autour de l'axe principal, ledit premier boitier (400) comprenant deux moyens d'entrainement (404) symétriques se présentant sous la forme de deux doigts, chaque doigt étant agencé sur un rail coulissant (406) relié à un vérin (410) prévu pour déplacer ledit doigt dans le plan perpendiculaire audit axe principal.

15. Dispositif selon l'une quelconque des revendications 1 à 14, dans lequel le deuxième ensemble (500) est un boitier cylindrique, dit deuxième boitier, rotatif autour de l'axe principal, ledit deuxième boitier (500) comprenant :
- deux interfaces de liaison (506), chaque interface de liaison (506) se présentant sous la forme d'une demi-couronne à denture interne et comprenant une ouverture oblongue (507) prévue pour recevoir un moyen d'entrainement (108;404),
- un pignon (510), rotatif autour de l'axe principal, en prise avec les dentures des demi-couronnes,
- une came (514) se présentant sous la forme de « 8 » reliée par un arbre (512) audit pignon (510), et
- deux galets suiveurs (518) agencés symétriques et libres en translation dans ledit deuxième boitier (500) et maintenus en contact avec la came (514) par huit ressorts (524).

16. Dispositif (100) selon l'une quelconque des revendications 1 à 15, dans lequel le premier ensemble (102;400) comprend au moins un roulement (412) agencé en contact avec le deuxième ensemble (104;500) et prévu pour permettre la rotation entre le premier ensemble (102;400) et le deuxième ensemble (104;500).

17. Dispositif (100) selon l'une quelconque des revendications 1 à 16, comprenant :
- au moins un capteur de position prévu pour mesurer une rotation du premier ensemble (102;400) par rapport au deuxième ensemble (104;500), et/ou
- au moins un capteur de déformation prévu pour mesurer un effort au niveau du premier ensemble (102;400) et/ou du deuxième ensemble (104;500).

18. Robot comprenant au moins un dispositif (100) selon l'une quelconque des revendications 1 à 17 entre deux segments dudit robot.

19. Robot selon la revendication 18, se présentant sous la forme d'un bras manipulateur équipé ou non d'un outil ou d'une tête fonctionnelle ou d'un porte outil.

## Patentansprüche

1. Mechanische Vorrichtung (100) zur Übertragung einer Drehbewegung um eine Drehachse (106), die als Hauptachse bezeichnet wird, von einem ersten Segment auf ein zweites Segment eines Roboters, wobei die Vorrichtung (100) aufweist:
- eine erste Baugruppe (102;400), die dazu vorgesehen ist, an dem ersten Segment befestigt zu werden,
- eine zweite Baugruppe (104;500), die dazu vorgesehen ist, an dem zweiten Segment befestigt zu werden,
- eine Antriebseinrichtung (108;404) zwischen den Baugruppen (102;400,104;500);
wobei auf der Seite einer der Baugruppen (104; 500) das Antriebsmittel (108; 404) mit der Baugruppe (104; 500) durch eine Verbindungsschnittstelle (110; 506) verbunden ist, die elastisch um eine Drehachse (112; 505) drehbar ist, die als Sekundärachse bezeichnet wird und in Bezug auf die Baugruppe (104; 500) feststehend ist, was eine Drehung des Antriebsmittels (108; 404) in Bezug auf die Baugruppe (104; 500) zulässt, **dadurch gekennzeichnet, dass** die Vorrichtung auf der Seite einer gleichen Baugruppe (102; 400, 104; 500) zwei Verbindungsschnittstellen (110; 506) aufweist, die mit einem gleichen Rückstellmechanismus (114, 200) zusammenwirken, der sich elastisch der Drehung jeder Verbindungsschnittstelle (110; 506) widersetzt.

2. Vorrichtung (100) nach Anspruch 1, bei der das Antriebsmittel (108; 404) in einem von Null verschiedenen Abstand (116) von der Sekundärachse (112; 505) angeordnet ist, so dass die Verbindungsschnittstelle (110; 506) die Drehung des Antriebsmittels (108; 404) bewirkt, wenn die Vorrichtung (100) einem Drehmoment ausgesetzt ist, das über einem Schwellenwert, dem sogenannten Sicherheitsschwellenwert, liegt.

3. Vorrichtung (100) nach Anspruch 2, die mindestens ein Einstellmittel zur Anpassung der Position des Antriebsmittels (108; 404) in Bezug auf die Sekundärachse (112; 505) aufweist, so dass der Sicherheitsschwellenwert geändert wird.

4. Vorrichtung (100) nach Anspruch 3, wobei das Einstellmittel auf der Seite der Verbindungsschnittstelle (110;506) eine längliche Öffnung (507) aufweist, in der das Antriebsmittel (108;404) angeordnet ist.

5. Vorrichtung nach Anspruch 4, wobei, wenn das Antriebsmittel (108;404) in einer Position, der sogenannten Stopp-Position, auf der Seite der Hauptdrehachse (106) in der länglichen Öffnung (507) anschlägt, eine Drehung der Baugruppen (102;400, 104;500) zueinander nicht möglich ist.

6. Vorrichtung (100) nach einem der Ansprüche 1 bis 5, wobei das Antriebsmittel (108; 404) zwei Finger aufweist, die symmetrisch zur Hauptdrehachse (106) angeordnet sind, und wobei die beiden Verbindungsschnittstellen (110; 506) elastisch um zwei Sekundärachsen (112; 505), die symmetrisch zur Hauptdrehachse (106) angeordnet sind, drehbar sind und jeweils einem der Finger zugeordnet sind.

7. Vorrichtung (100) nach Anspruch 6, die für jeden Finger ein Einstellmittel zur Anpassung der Position des Fingers aufweist.

8. Vorrichtung (100) nach einem der Ansprüche 1 bis 7, wobei der Rückstellmechanismus (114,200) aufweist:
- eine Nocke (202;514), die drehbar ist, insbesondere um die Hauptdrehachse (106);
- mindestens eine Folgerolle (204,518), die mit der Nocke (202;514) in Kontakt steht und von mindestens einer Rückstellfeder (524) gehalten wird;
so dass der Nocken (202;514) die Folgerolle (204,518) bei ihrer Drehung bewegt.

9. Vorrichtung (100) nach Anspruch 8, wobei das Profil der Nocke (202;514) symmetrisch zur Hauptdrehachse (106) ist.

10. Vorrichtung (100) nach Anspruch 8 oder 9, wobei der Nocken (202;514) die Form einer "8" aufweist, wobei seine Drehachse durch den Schwerpunkt des Nockens (202;514) verläuft und der Dicke des Nockens (202;514) folgt.

11. Vorrichtung (100) nach einem der Ansprüche 8 bis 10, wobei der Rückstellmechanismus (114, 200) zwei Folgerollen (204; 518) aufweist, die symmetrisch zur Drehachse der Nocke (202, 514) angeordnet sind.

12. Vorrichtung (100) nach einem der Ansprüche 8 bis 11, bei der die Nocke (202, 514) mit der Verbindungsschnittstelle (110; 506) über ein Ritzel (510) verbunden ist, das mit der Nocke (202, 514) fest verbunden ist und mit einer an der Verbindungsschnittstelle (110; 506) vorgesehenen Verzahnung (510) in Eingriff steht.

13. Vorrichtung (100) nach einem der Ansprüche 1 bis 12, wobei die Verbindungsschnittstelle (110;506) in Form eines innenverzahnten Halbkranzes vorliegt.

14. Vorrichtung nach einem der Ansprüche 1 bis 13, bei der die erste Baugruppe (400) ein zylindrisches Gehäuse, erstes Gehäuse genannt, ist, das um die Hauptachse drehbar ist, wobei das erste Gehäuse (400) zwei symmetrische Antriebsmittel (404) in Form von zwei Fingern aufweist, wobei jeder Finger auf einer Gleitschiene (406) angeordnet ist, die mit einem Zylinder (410) verbunden ist, der dazu vorgesehen ist, den Finger in der Ebene senkrecht zur Hauptachse zu bewegen.

15. Vorrichtung nach einem der Ansprüche 1 bis 14, bei der die zweite Baugruppe (500) ein um die Hauptachse drehbares zylindrisches Gehäuse, das sogenannte zweite Gehäuse, ist, wobei das zweite Gehäuse (500) aufweist:
- zwei Verbindungsschnittstellen (506), wobei jede Verbindungsschnittstelle (506) in Form eines innenverzahnten Halbkranzes vorliegt und eine längliche Öffnung (507) aufweist, die zur Aufnahme eines Antriebsmittels (108;404) vorgesehen ist,
- ein Ritzel (510), das um die Hauptachse drehbar ist und mit den Verzahnungen der Halbkronen in Eingriff steht,
- einen Nocken (514) in Form einer "8", der über eine Welle (512) mit dem Ritzel (510) verbunden ist, und
- zwei Folgerollen (518), die symmetrisch und frei translatorisch in dem zweiten Gehäuse (500) angeordnet sind und durch acht Federn (524) in Kontakt mit der Nocke (514) gehalten werden.

16. Vorrichtung (100) nach einem der Ansprüche 1 bis 15, wobei die erste Baugruppe (102; 400) mindestens ein Lager (412) aufweist, das in Kontakt mit der zweiten Baugruppe (104; 500) angeordnet und dafür vorgesehen ist, eine Drehung zwischen der ersten Baugruppe (102; 400) und der zweiten Baugruppe (104; 500) zu ermöglichen.

17. Vorrichtung (100) nach einem der Ansprüche 1 bis 16, aufweisend:
- mindestens einen Positionssensor, der dazu vorgesehen ist, eine Drehung der ersten Baugruppe (102;400) relativ zu der zweiten Baugruppe (104;500) zu messen, und/oder
- mindestens einen Deformationssensor, der dazu vorgesehen ist, eine Kraft an der ersten Baugruppe (102;400) und/oder der zweiten Baugruppe (104;500) zu messen.

18. Roboter aufweisend mindestens einer Vorrichtung (100) nach einem der Ansprüche 1 bis 17 zwischen zwei Segmenten des Roboters.

19. Roboter nach Anspruch 18 in Form eines Manipulatorarms, der mit einem Werkzeug oder einem Funktionskopf oder einem Werkzeughalter ausgestattet ist oder nicht.

## Claims

1. A mechanical device (100) for transmitting a rotational movement about a so-called main axis of rotation (106) from a first segment to a second segment of a robot, said device (100) comprising:
- a first assembly (102;400), provided to be attached to said first segment,
- a second assembly (104;500), provided to be attached to said second segment,
- a drive means (108;404) between said assemblies (102;400,104;500);
wherein, on the side of one of said assemblies (104;500), said drive means (108;404) is connected to said assembly (104;500) by a connecting interface (110;506), elastically rotatable about a so-called secondary axis of rotation (112;505), fixed with respect to said assembly (104;500), allowing rotation of said drive means (108;404) with respect to said assembly (104;500), **characterized in that** the device comprises, on the side of the same assembly (102;400,104;500), two connecting interfaces (110;506), cooperating with the same return mechanism (114,200) elastically opposing the rotation of each connecting interface (110;506).

2. A device (100) according to claim 1, wherein the drive means (108;404) is arranged at a non-zero distance (116) from the secondary axis (112;505) such that the connecting interface (110;506) causes said drive means (108;404) to rotate when said device (100) is subjected to a torque greater than a so-called safety threshold.

3. A device (100) according to claim 2, comprising at least one means for adjusting the position of the drive means (108;404) relative to the secondary axis (112;505) so as to change the safety threshold.

4. A device (100) according to claim 3, wherein the adjustment means comprises, on the side of the connecting interface (110;506), an oblong opening (507) in which the drive means (108;404) is arranged.

5. A device according to claim 4, wherein, when the drive means (108;404) is in a so-called stop position abutting in the elongated opening (507) on the side of the main axis of rotation (106), rotation of the assemblies (102;400, 104;500) with each other is not possible.

6. A device (100) according to any one of claims 1 to 5, wherein the drive means (108;404) comprises two fingers, arranged symmetrically with respect to the main axis of rotation (106), and wherein the two connecting interfaces (110;506) are elastically rotatable about two secondary axes (112;505) symmetrical with respect to the main axis of rotation (106), and each associated with one of said fingers.

7. A device (100) according to claim 6 comprising, for each finger, means for adjusting the position of said finger.

8. A device (100) according to any one of claims 1 to 7, wherein the return mechanism (114,200) comprises:
- a cam (202;514) that can rotate, in particular about the main axis of rotation (106);
- at least one follower roller (204,518) in contact with said cam (202;514) held by at least one return spring (524);
so that said cam (202;514) moves said follower roller (204,518) in its rotation.

9. A device (100) according to claim 8, wherein the profile of the cam (202;514) is symmetrical with respect to the main axis of rotation (106).

10. A device (100) according to claim 8 or 9, wherein the cam (202;514) is in the form of an "8", its axis of rotation passing through the centre of gravity of said cam (202;514) and along the thickness of said cam (202;514).

11. A device (100) according to any one of claims 8 to 10, wherein the return mechanism (114,200) comprises two follower rollers (204;518) arranged symmetrically with respect to the axis of rotation of the cam (202,514).

12. A device (100) according to any one of claims 8 to 11, wherein the cam (202,514) is connected to the connecting interface (110;506) through a pinion (510) integral with said cam (202,514), and in engagement with a toothing (510), provided on said connecting interface (110;506).

13. A device (100) according to any one of claims 1 to 12, wherein the connecting interface (110;506) is in the form of an internally toothed half ring.

14. A device according to any one of claims 1 to 13, in which the first assembly (400) is a cylindrical case, known as the first case, rotatable about the main axis, said first case (400) comprising two symmetrical drive means (404) in the form of two fingers, each finger being arranged on a sliding rail (406) connected to an actuator (410) provided to move said finger in the plane perpendicular to said main axis.

15. A device according to any one of claims 1 to 14, wherein the second assembly (500) is a cylindrical case, called second case, rotatable about the main axis, said second case (500) comprising:
- two connecting interfaces (506), each connecting interface (506) being in the form of an internally toothed half ring gear and comprising an oblong opening (507), provided to receive a drive means (108;404),
- a pinion (510), rotatable about the main axis, in mesh with the teeth of the half-crowns,
- a cam (514) in the form of an "8" connected by a shaft (512) to said pinion (510), and
- two follower rollers (518) arranged symmetrically and free in translation in said second housing (500) and held in contact with the cam (514) by eight springs (524).

16. A device (100) according to any one of claims 1 to 15, wherein the first assembly (102;400) comprises at least one bearing (412) arranged in contact with the second assembly (104;500) and provided to allow rotation between the first assembly (102;400) and the second assembly (104;500).

17. A device (100) according to any of claims 1 to 16, comprising:
- at least one position sensor, provided to measure a rotation of the first assembly (102;400) relative to the second assembly (104;500), and/or
- at least one deformation sensor, provided to measure a force at the first assembly (102;400) and/or the second assembly (104;500).

18. A robot comprising at least one device (100) according to any of claims 1 to 17 between two segments of said robot.

19. A robot according to claim 18, in the form of a manipulator arm with or without a tool or functional head or tool holder.
